(19) Europäisches Patentamt
European Patent Office
Office européen des brevets

(11) Veröffentlichungsnummer: **0 242 731 B2**

(12) # NEUE EUROPÄISCHE PATENTSCHRIFT

(45) Veröffentlichungstag der neue Patentschrift: **14.12.94**

(51) Int. Cl.[5]: **C08G 18/10**, C08G 18/32, C08G 18/08, C09D 175/00

(21) Anmeldenummer: **87105305.4**

(22) Anmeldetag: **10.04.87**

(54) **Verfahren zur Herstellung von wässrigen Dispersionen von Polyurethan-Polyharnstoffen und ihre Verwendung als oder zur Herstellung von Beschichtungsmitteln.**

(30) Priorität: **22.04.86 DE 3613492**

(43) Veröffentlichungstag der Anmeldung: **28.10.87 Patentblatt 87/44**

(45) Bekanntmachung des Hinweises auf die Patenterteilung: **18.12.91 Patentblatt 91/51**

(45) Bekanntmachung des Hinweises auf die Entsheidung über den Einspruch: **14.12.94 Patentblatt 94/50**

(84) Benannte Vertragsstaaten: **AT CH DE ES FR GB IT LI NL SE**

(56) Entgegenhaltungen:
**US-A- 4 203 883**
**US-A- 4 501 852**

(73) Patentinhaber: **BAYER AG**
**D-51368 Leverkusen (DE)**

(72) Erfinder: **Noll, Klaus, Dr.**
**Morgengraben 6**
**D-5000 Köln 80 (DE)**
Erfinder: **Mosbach, Jürgen, Dr.**
**Kattersbachstrasse 108**
**D-5060 Bergisch-Gladbach 2 (DE)**
Erfinder: **Pedain, Josef, Dr.**
**Haferkamp 6**
**D-5000 Köln 80 (DE)**
Erfinder: **Nachtkamp, Klaus, Dr.**
**Silcherstrasse 13**
**D-4000 Düsseldorf 13 (DE)**
Erfinder: **Schwindt, Jürgen, Dr.**
**H.T. von Böttinger-Strasse 14**
**D-5090 Leverkusen 1 (DE)**

EP 0 242 731 B2

## Beschreibung

Die Erfindung betrifft ein neues Verfahren zur Herstellung von wäßrigen Dispersionen von Polyurethan-Polyharnstoffen, wobei man zunächst in organischer Lösung unter Verwendung ausgewählter Ausgangsmaterialien in ausgewählten Mengenverhältnissen freie Isocyanatgruppen aufweisende Polyurethan-Polyharnstoffe herstellt und die resultierenden Lösungen anschließend in Wasser dispergiert, und ihre Verwendung als Beschichtungsmittel oder zur Herstellung von Beschichtungsmitteln für harte, nicht-flexible Substrate.

Wäßrige Dispersionen von Polyurethanen werden in jüngerer Zeit zunehmend zur Herstellung von Lacküberzügen mit einem hohen Eigenschaftsniveau verwendet. Die Einsatzgebiete umfassen neben der Lackierung von Holz zunehmend auch die Außenanwendung, bei der hohe Wetter- und Strapazierfähigkeit unabdingbar sind. Mit wäßrigen, lufttrocknenden Lacken werden bereits Kunststoffteile für Automobile überzogen und die Anwendung als metallic base coat auf Automobilkarossen ist ein großes potentielles Anwendungsgebiet, das schon wegen der Möglichkeit, die Lösungsmittelemission zu reduzieren, hohe Attraktivität besitzt.

Für diese Anwendungen werden seit einigen Jahren wäßrige Polyurethandispersionen bereitgehalten, deren im wesentlichen aus difunktionellen Bausteinen aufgebaute Festkörper Carboxylgruppen aufweisende Komponenten enthalten. Die Carbonsäuregruppen sind mit tertiären Aminen in Salzgruppen überführt, die die Dispergierbarkeit des Festkörpers gewährleisten und den besonderen Vorzug besitzen, im fertigen Lackfilm durch Verdunsten des tertiären Amins ihren Ionencharakter allmählich zu verlegen (z.B. US-PS 4 066 591). Dies verleiht den Lacküberzügen eine hervorragende Wasserbeständigkeit. Derartige Dispersionen besitzen allerdings zwei empfindliche Nachteile:

- Ihre Lösungsmittel- und ihre Wetterbeständigkeit sind mangelhaft
- Ihre Lagerstabilität ist begrenzt, insbesondere dann, wenn die Dispersion praktisch neutral, d.h. einen pH-Wert von etwa 7 besitzen soll.

Die Bemühungen, dem ersten Nachteil abzuhelfen, haben zu Verfahren geführt, bei denen polyfunktionelle Bausteine, meist bei der Kettenverlängerung der den Festkörpern zugrunde liegenden NCO-Prepolymeren, verwendet werden (z.B. US-PS 4 203 883 oder US-PS 3 870 684). Diese Dispersionen weisen jedoch den Nachteil einer oftmals unzureichenden Lagerstabilität auf. Eine diesbezügliche Besserung wurde mit dem Einbau von nicht-ionischen hydrophilen Gruppierungen, die die Carboxylatgruppen des Polyurethans zum Teil ersetzen, erreicht (US-PS 4 408 008). Die Herstellung von wäßrigen Dispersionen von verzweigten Polyurethanen bedingte jedoch bislang eine Reihe von Verfahrensmaßnahmen, die sich nachteilig auswirken:

1. Für eine gute Verteilung in Wasser dürfen die in Wasser zu dispergierenden Polymere nur eine begrenzte Viskosität aufweisen. Damit verbietet sich insbesondere die Mitverwendung mehr als unwesentlicher Mengen kettenverzweigender Komponenten. Zur Überwindung dieses Viskositätslimits können zwar die in Wasser zu dispergierende Polymere mit hochsiedenden, polaren Lösungsmitteln verdünnt werden, was allerdings bei vielen Anwendungen eine empfindliche Verzögerung der Trocknung der Lacküberzüge bewirkt.
2. Die Kettenverlängerung bzw. -verzweigung in wäßriger Phase - also die Zugabe der Di- und Polyamine zu dem bereits in Wasser dispergierten Prepolymeren - führt, da sie in Konkurrenz zur Isocyanat/Wasser-Reaktion und insbesondere weil sie im heterogenen System verläuft, dazu, daß ein Rest an nicht reagierten Aminogruppen zurückbleibt, der den pH-Wert der resultierenden Dispersion deutlich über 7, normalerweise in den Bereich um 8 bis 9,0 anhebt. Wäßrige Dispersionen eines solchen pH-Bereichs eignen sich jedoch nicht zur Herstellung von hochwertigen, Aluminiumpigmentierten Metallic-Lackierungen, da Aluminium von wäßrigen Systemen dieses pH-Bereichs bereits merklich unter Bildung von Aluminiumoxid angegriffen wird, was dazu führt, daß die Lackierungen ein stumpfes Aussehen erhalten.

Es ist zwar auch möglich, wäßrige Polyurethandispersionen nach dem sogenannten "Acetonverfahren" herzustellen, d.h. den Aufbau des kettenverlängerten, hochmolekularen Polyurethans in acetonischer Lösung durchzuführen und anschließend das gelöste Polyurethan durch Vermischen der Lösung mit Wasser und Abdestillieren des Lösungsmittels in eine wäßrige Dispersion zu überführen. Alle bekannten Verfahren zur Herstellung von wäßrigen Dispersionen von verzweigten oder vernetzten Polyurethanen machten jedoch von diesem Verfahren keinen Gebrauch, da es bislang als gesicherte Erkenntnis galt, daß in schwach polaren, niedrig siedenden Lösungsmitteln wie Aceton der Aufbau eines Polyurethans nur dann gelingt. wenn nahezu ausschließlich difunktionelle Bausteine eingesetzt werden (s. US-4 501 852).

Es war daher die der Erfindung zugrundeliegende Aufgabe, ein neues Verfahren zur Herstellung von wäßrigen Dispersionen von aminverlängerten Polyurethanen, d.h. von Polyurethan-Polyharnstoffen zur Verfügung zu stellen, welches insbesondere folgende Vorteile in sich vereint:

1. Das Verfahren sollte ohne Mitverwendung von hochpolaren, hochsiedenden Hilfslösungsmitteln durchführbar sein.

2. Die resultierenden Dispersionen sollten eine hohe Lagersabilität aufweisen.

3. Die resultierenden Dispersionen sollten nahezu neutral sein, d.h. einen bei ca. 7 liegenden pH-Wert aufweisen.

4. Die dispergierten Polyurethan-Polyharnstoffe sollten einen gewissen Verzweigungsgrad aufweisen, so daß Härte und Lösungsmittelresistenz der aus ihnen hergestellten Beschichtungen den hohen diesbezüglichen Anforderungen der Praxis genügt.

Diese Aufgabe konnte durch das nachstehend näher beschriebene erfindungsgemäße Verfahren gelöst werden.

Gegenstand der Erfindung ist ein Verfahren zur Herstellung von wäßrigen Dispersionen von Polyurethan-Polyharnstoffen durch Umsetzung von

a) NCO-Prepolymeren auf Basis von (i) organischen Polyhydroxylverbindungen und gegebenenfalls organischen Monohydroxylverbindungen und (ii) überschüssigen Mengen an organischen Polyisocyanaten und gegebenenfalls Monoisocyanaten

mit b) organischen Polyaminen

in Gegenwart eines mit Wasser mischbaren, gegenüber Isocyanatgruppen inerten, schwach polaren Lösungsmittels mit einem bei Normaldruck unterhalb 100° C liegenden Siedepunkt, wobei die Komponente a) und/oder die Komponente b) Carboxylatgruppen und/oder nicht-ionisch-hydrophile Gruppierungen aufweisen, so daß in den Verfahrensprodukten, bezogen auf Feststoff, bis zu 100 Milliäquivalente pro 100 g an Carboxylatgruppen und bis zu 10 Gew.-% an in end- oder seitenständigen Polyetherketten eingebauten Ethylenoxideinheiten vorliegen, und anschließende Überführung der resultierenden Lösung der Umsetzungsprodukte in dem genannten Lösungsmittel in eine wäßrige Dispersion durch Vermischen mit Wasser und gegebenenfalls anschließende destillative Entfernung des eingesetzten Lösungsmittels, dadurch gekennzeichnet, daß man

a) als NCO-Prepolymere solche einer (mittleren) NCO-Funktionalität von 2 bis 2.3 und mit einem (mittleren) Molekulargewicht von 700 bis 5000

und

b) als organische Polyamine primäre und/oder sekundäre Aminogruppen aufweisende Polyamine oder deren Gemische einer (mittleren) Aminfunktiönalität von 2,05 bis 3 und mit einem (mittleren) Molekulargewicht von 60 bis 2000

verwendet und die Reaktion unter Einhaltung eines Äquivalentverhältnisses von Isocyanatgruppen der Komponente a) zu Aminogruppen der Komponente b) von 1,05:1 bis 3:1 durchführt wobei Art und Mengenverhältnisse im übrigen so gewählt werden, daß die resultierenden Umsetzungsprodukte eine NCO-Funktionalität von 2,2 bis 3,0 und einen NCO-Gehalt von 0,1 bis 5.0 Gew.-% aufweisen.

Gegenstand der Erfindung sind auch die nach diesem Verfahren erhältlichen Dispersionen von Polyurethan-Polyharnstoffen.

Gegenstand der Erfindung ist schließlich auch die Verwendung der nach diesem Verfahren erhältlichen Dispersionen von Polyurethan-Polyharnstoffen als Beschichtungsmittel oder zur Herstellung von Beschichtungsmitteln für harte, unflexible Substrate.

Die beim erfindungsgemäßen Verfahren einzusetzenden NCO-Prepolymeren a) werden aus den obengenannten Ausgangskomponenten (i) und (ii) hergestellt.

Zu den für das erfindungsgemäße Verfahren geeigneten Ausgangskomponenten (i) gehören insbesondere die aus der Polyurethanchemie an sich bekannten höhermolekularen Polyhydroxylverbindungen des Molekulargewichtsbereichs 300 bis 6000, vorzugsweise 500 bis 3000 wie z.B. die in der Polyurethanchemie an sich bekannten Dihydroxypolyester aus Dicarbonsäuren, z.B. Bernsteinsäure, Adipinsäure. Korksäure. Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder verschiedenen isomeren Bishydroxymethylcylcohexane; die in der Polyurethan-Chemie an sich bekannten Polylactone, wie z.B. die auf den obengenannten zweiwertigen Alkoholen gestarteten Polymerisate des Caprolactons; die in der Polyurethan-Chemie an sich bekannten Polycarbonate, wie sie durch Umsetzung beispielsweise der obengenannten Diole mit Diarylcarbonaten oder Phosgen zugänglich sind; die in der Polyurethan-Chemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an

Ethylenoxideinheiten enthält. Vorzugsweise werden solche Polyetherdiole verwendet, die ohne Mitverwendung von Ethylenoxid, d.h. insbesondere unter ausschließlicher Verwendung von Propylenoxid erhalten wurden.

Neben diesen höhermolekularen difunktionellen Verbindungen kann die Komponente (i) auch noch geringe Mengen an tri-oder höherfunktionellen Polyhydroxylverbindungen der genannten Art, insbesondere Polyetherpolyole aufweisen, deren Molekulargewicht innerhalb der genannten Grenzen liegt, und die unter (Mit)Verwendung von höherfunktionellen Ausgangsmaterialien wie beispielsweise Trimethylolpropan, Glycerin oder Ethylendiamin erhalten worden sind.

Die Komponente (i) kann neben diesen höhermolekularen Polyhydroxylverbindungen auch niedermolekulare Polyhydroxylverbindungen des Molekulargewichtsbereichs 62 bis 299 in Mengen von bis zu 75 OH-Äquivalent-%, bezogen auf die gesamte Komponente (i) enthalten. Hierzu gehören zweiwertige Alkohole der bereits oben beispielhaft genannten Art und tri- oder polyfunktionelle, niedermolekulare Alkohole wie z.B. Glycerin, Trimethylolpropan, Trimethylolethan, die isomeren Hexantriole oder Pentaerythrit.

Die Komponente (i) kann auch Verbindungen mit Carboxylatgruppen oder mit nicht-ionisch hydrophilen Gruppen der weiter unten beschriebenen Art aufweisen.

Bei den Ausgangskomponenten (ii) handelt es sich um organische Polyisocyanate der aus der Polyurethanchemie an sich bekannten Art, die im allgemeinen ein Molekulargewicht von 112 bis 1000, vorzugsweise 140 bis 400 und eine NCO-Funktionalität von 2 bis 4, vorzugsweise 2 bis 3 aufweisen. In Betracht kommen insbesondere Polyisocyanate der allgemeinen Formel $R(NCO)_n$, wobei R für einen organischen Rest steht, wie er durch Entfernung der Isocyanatgruppen aus einem organischen Polyisocyanat des Molekulargewichtsbereichs 112-1000, vorzugsweise 140-400, erhalten wird, und n für 2-4, vorzugsweise 2 und 3 steht. Besonders bevorzugte für das erfindungsgemäße Verfahren geeignete Polyisocyanate sind solche der angegebenen allgemeinen Formel, für welche R für einen zweiwertigen aliphatischen Kohlenwasserstoffrest mit 4-18 Kohlenstoffatomen oder einen zweiwertigen cycloaliphatischen Kohlenwasserstoffrest mit 5-15 Kohlenstoffatomen, Möglich, aber nicht bevorzugt ist die Verwendung von Polyisocyanaten, in denen R für einen zweiwertigen aromatischen Kohlenwasserstoffrest mit 6-15 Kohlenstoffatomen oder einen araliphatischen Kohlenwasserstoffrest mit 7-15 Kohlenstoffatomen steht. Typische Vertreter sind z.B. Tetramethylendiisocyanat, Hexamethylendiisocyanat, Dodecamethylendiisocyanat, 2,2,4-Trimethylhexandiisocyanat, Undecandiisocyanat-1,11, Lysinesterdiisocyanat, Cyclohexan-1,3- und -1,4-diisocyanat, 1-Isocyanato-3-isocyanatomethyl-3,5,5-trimethylcyclohexan, 4,4'-Diisocyanatodicyclohexylmethan und

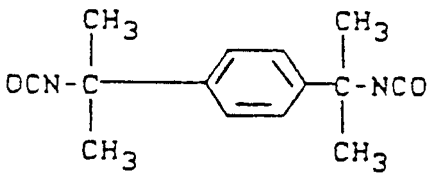

bzw. dessen 1,3-Isomeres.

Zu den höherfunktionellen Polyisocyanaten, die zum Zwecke der Verzweigung der NCO-Prepolymeren a) oftmals anteilig mitverwendet werden gehören beispielsweise Urethangruppen aufweisende Triisocyanate, wie sie durch Umsetzung aus den beispielhaft genannten Diisocyanaten mit unterschüssigen Mengen an trifunktionellen, niedermolekularen Polyhydroxylverbindungen der oben beispielhaft genannten Art und gegebenenfalls anschließende destillative Entfernung des überschüssigen Ausgangsdiisocyanats hergestellt worden sind; durch Trimerisierung der beispielhaft genannten Diisocyanate erhaltene, Isocyanuratgruppen aufweisende Polyisocyanate oder Biuretpolyisocyanate auf Basis der beispielhaft genannten Diisocyanate.

Die für die Dispergierbarkeit in Wasser erforderlichen Carboxylatgruppen und/oder nicht-ionisch hydrophilen Gruppen werden vorzugsweise durch Mitverwendung entsprechender Ausgangsmaterialien als Teil der Komponente (i) und/oder (ii) bei der Herstellung der NCO-Prepolymeren a) in die erfindungsgemäßen Verfahrensprodukte eingebaut. Zu diesen hydrophilen Aufbaukomponenten gehören beispielsweise beliebige Monoisocyanate und/oder einwertige Hydroxylverbindungen mit Ethylenoxid-Einheiten aufweisenden hydrophilen Ketten oder beliebige Mono- oder Diisocyanate und/oder ein- oder mehrwertige Alkohole mit ionischen Gruppen oder in ionische Gruppen überführbaren Gruppen. Die Isocyanatgruppen aufweisenden Aufbaukomponenten werden bei der Herstellung der NCO-Prepolymeren a) der Komponente (ii) und die Alkohole der Komponente (i) einverleibt.

In Betracht kommen beispielsweise Verbindungen der Formel

H-X-Y-R' (I)

und/oder Verbindungen der Formel

OCN-R-NH-CO-X-Y-R' (II)

In obigen Formeln (I) und (II) stehen

R für einen zweiwertigen Rest, wie er durch Entfernung der Isocyanatgruppen aus einem Diisocyanat der Formel $R(NCO)_n$ (n = 2) der vorstehend genannten Art erhalten wird,

R' für einen einwertigen Kohlenwasserstoffrest mit 1 bis 12 Kohlenstoffatomen, vorzugsweise einen unsubstituierten Alkylrest mit 1 bis 4 Kohlenstoffatomen,

X für eine Polyalkylenoxidkette mit 5 bis 90, vorzugsweise 20 bis 70 Kettengliedern, welche zumindest zu 40 %, vorzugsweise zumindest zu 65 % aus Ethylenoxid-Einheiten bestehen und die neben Ethylenoxid-Einheiten auch Propylenoxid-, Butylenoxid- oder Styroloxid-Einheiten darstellen können, wobei unter den letztgenannten Einheiten Propylenoxid-Einheiten bevorzugt sind, und

Y vorzugsweise für Sauerstoff oder auch für -NR"-steht, wobei R" bezüglich seiner Definition R entspricht.

Die Herstellung dieser monofunktionellen hydrophilen Aufbaukomponenten erfolgt in Analogie zu DE-OS 2 314 512 oder 2 314 513 bzw. US-PS 3 905 929, 3 920 598 oder US-PS 4 237 264 durch Alkoxylierung eines monofunktionellen Starters wie z.B. n-Butanol oder N-Methyl-butylamin unter Verwendung von Ethylenoxid und gegebenenfalls einem weiteren Alkylenoxid wie z.B. Propylenoxid und gegebenenfalls anschließende Umsetzung des resultierenden einwertigen Alkohols der Formel I mit einem Diisocyanat der Formel $R(NCO)_2$.

Zu den bevorzugten Aufbaukomponenten mit (potentiellen) Carboxylatgruppen gehören insbesondere Verbindungen der allgemeinen Formel

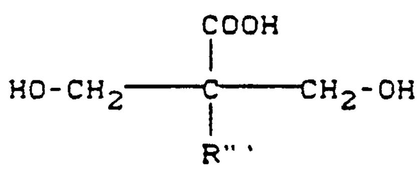

in welcher

R''' für einen Alkylrest mit 1 bis 4 Kohlenstoffatomen, vorzugsweise eine Methylgruppe (Dimethylolpropionsäure) steht.

Anstelle dieser Dihydroxycarbonsäuren können auch die entsprechenden Salze, vorzugsweise mit tertiären Aminen wie Triethylamin, Tri-n-butylamin, N,N,N-Trimethylcyclohexylamin, N-Methylmorpholin, N-Methylpiperazin, N,N-Dimethylethanolamin, N-Methylpiperidin, Triethanolamin eingesetzt werden, wobei sowohl die freien Säuren als auch ihre Aminsalze bei der Herstellung der NCO-Prepolymeren a) der Komponente (i) zugesetzt werden.

Zur Herstellung der NCO-Prepolymeren a) werden zunächst die Ausgangskomponenten (i) und (ii) durch Abmischung ihrer Einzelkomponenten hergestellt. Anschließend werden die Ausgangskomponenten (i) und (ii) miteinander vereinigt, wonach das Reaktionsgemisch bei 50 bis 150° C, vorzugsweise bei 70 bis 120° C liegenden Temperaturen. gegebenenfalls nach Zugabe der in der Polyurethanchemie an sich bekannten Katalysatoren für die Isocyanat-Additionsreaktion zur Reaktion gebracht wird. Die Mengenverhältnisse der Ausgangskomponenten werden dabei im allgemeinen so gewählt, daß das Äquivalentverhältnis von Isocyanatgruppen der Komponente (ii) zu Hydroxylgruppen der Komponente (i) bei 1,2:1 bis 3,0:1, vorzugsweise bei 1,5:1 bis 2,2:1 liegt. Außerdem werden Art und Mengenverhältnisse der Reaktionspartner im allgemeinen so gewählt, daß die resultierenden NCO-Prepolymeren eine mittlere NCO-Funktionalität von 2,0 bis 2,3, vorzugsweise von 2,05 bis 2,15 und einem NCO-Gehalt von 5 bis 15, vorzugsweise 6 bis 12 Gew.-% aufweisen. Im übrigen sollte der Anteil an niedermolekularen Polyhdyroxylverbindungen des Molekulargewichtsbereichs 62 bis 299 in der Komponente (i) so bemessen sein, daß die resultierenden Verfahrensprodukte, bezogen auf Feststoff, einen Gehalt an Urethangruppen -NH-CO-O- von 5 bis 20 Gew.-%, vorzugsweise 8 bis 15 Gew.-% aufweisen.

Die mittlere NCO-Funktionalität der NCO-Prepolymeren kann aus der Anzahl der Äquivalente (Val) der zum Einsatz gelangenden Isocyanat und Hydroxylgruppen und der Anzahl der Mole (Mol) der zum Einsatz gelangenden Isocyanat bzw. Hydroxylverbindungen nach folgender Gleichung berechnet werden

$$f = \frac{\Sigma Val_{NCO} - \Sigma Val_{OH}}{\Sigma Mol_{(NCO + OH\text{-}Verb.)} - \Sigma Val_{OH}}$$

Die Herstellung der NCO-Prepolymeren a) kann gewünschtenfalls bereits in Gegenwart des bei der anschließenden Umsetzung der Komponenten a) und b) zwingend anwesenden, schwach polaren Lösungsmittels, welches gegenüber Isocyanatgruppen inert und mit Wasser mischbar ist und bei Normaldruck einen unterhalb 100° C liegenden Siedepunkt aufweist, durchgeführt werden. Als Lösungsmittel für diesen Zweck kommen insbesondere Aceton und/oder Methylethylketon in Betracht.

Falls die Herstellung der NCO-Prepolymeren a) nicht bereits in Gegenwart eines derartigen Lösungsmittels durchgeführt worden ist, wird das NCO-Prepolymer nach seiner Herstellung in einem derartigen Lösungsmittel gelöst. Diese Lösung wird anschließend, wie nachstehend näher beschrieben, mit der Polyaminkomponente b) zur Reaktion gebracht.

Bei der Polyaminkomponente b) handelt es sich um Polyamine oder um Gemische von Di- und Polyaminen einer (mittleren) Aminfunktionalität von 2,05 bis 3 und eines (mittleren) Molekulargewichts im Bereich von 60 bis 2000, vorzugsweise 60 bis 300. Wesentlich ist hierbei das Vorliegen von primären und/oder sekundären Aminogruppen in den genannten Polyaminen, so daß die gemachten Angaben bezüglich der Amin-Funktionalität sich ausschließlich auf primäre und sekundäre Aminogruppen, nicht jedoch auf gegebenenfalls ebenfalls vorliegende tertiäre Aminogruppen beziehen.

Als Diamine eignen sich z.B. Ethylendiamin, 1,2- und 1,3-Diaminopropan, 1,6-Diaminohexan, 1,3-Diamino-2,2-dimethylpropan, Isophorondiamin, 1,3- und 1,4-Diaminohexan, 4,4'-Diamino-dicyclohexylmethan, 4,4'-Diamino-3,3'-dimethyl-dicyclohexylmethan, 1,4-Bis-(2-amino-prop-2-yl)-cyclohexan oder 3,3'-Dimethyl-4,4'-diamino-dicyclohexylmethan bzw. beliebige Gemische derartiger Diamine.

Als höherfunktionelle Polyamine eignen sich beispielsweise Tri- oder Tetramine wie Diethylentriamin. Triethylentetramin, Dipropylentriamin, Tripropylentetramin, hydrierte Anlagerungsprodukte von Acrylnitril an aliphatische oder cycloaliphatische Diamine, vorzugsweise entsprechender Anlagerungsverbindungen einer Acrylnitrilgruppe an ein Molekül eines Diamins, z.B. Hexamethylenpropylen-triamin, Tetramethylenpropylentriamin, Isophoron-propylen-triamin, 1,4- oder 1,3-Cyclohexanpropylentriamin oder beliebige Gemische derartiger Polyamine. Grundsätzlich ist auch möglich, neben diesen niedermolekularen Polyaminen eines bis 300 liegenden Molekulargewichts auch höhermolekulare Polyamine mitzuverwenden, so daß die Komponente b) ein mittleres Molekulargewicht von bis zu 2000 aufweist. Geeignete derartige höhermolekulare Polyamine sind beispielsweise die bekannten Polyetherpolyamine, wie sie durch Überführung der Hydroxylgruppen von Polyetherpolyolen der oben beispielhaft genannte Art in primäre Aminogruppen erhalten werden. Die Mitverwendung von derartigen, höhermolekularen Polyaminen ist jedoch weniger bevorzugt.

Wie bereits oben ausgeführt ist es auch möglich, in die erfindungsgemäßen Verfahrensprodukte hydrophile Segmente über die Polyaminkomponente b) einzubauen, obwohl dies eine weniger bevorzugte Variante des Einbaus von hydrophilen Gruppierungen ist. In einem solchen Falle würde man der Polyaminkomponente b) beispielsweise tert. Aminsalze von Diaminocarbonsäuren der allgemeinen Formel

$$H_2N\text{-}R^{v}\text{-}NH\text{-}CH_2\text{-}\underset{\displaystyle R^{iv}}{\overset{}{CH}}\text{-}COOH \quad (R^{iv} \text{ an CH})$$

beimischen, wobei $R^{iv}$ für Wasserstoff oder einen Alkylrest mit 1 bis 4 Kohlenstoffatomen, vorzugsweise für Wasserstoff oder einen Methylrest und $R^{v}$ für einen Alkylenrest mit 2 bis 18, vorzugsweise 2 bis 6 Kohlenstoffatomen steht. Auch hier kommen als tertiäre Amine die oben beispielhaft genannten in Betracht.

Die Art und Menge der in den Einzelkomponenten (i), (ii) und/oder b) vorliegenden Aufbaukomponenten mit Carboxyl-bzw. Carboxylatgruppen bzw. mit nichtionisch-hydrophilen Gruppen bzw. der Neutralisationsgrad von gegebenenfalls vorliegenden Carboxylgruppen werden im allgemeinen so gewählt, daß in den erfindungsgemäßen Verfahrensprodukten, bezogen auf Feststoff, 0 bis 100, vorzugsweise 0,4 bis 40 Milliäquivalente pro 100 g an Carboxylatgruppen und 0 bis 10, vorzugsweise 2 bis 8 Gew.-% an in end- oder auch seitenständigen Polyetherketten eingebauten Ethylenoxideinheiten $-CH_2\text{-}CH_2\text{-}O-$ vorliegen, wobei die Gesamtmenge dieser hydrophilen Gruppierungen so bemessen sein muß, daß die Dispergierbarkeit der

Verfahrensprodukte in Wasser gewährleistet ist. Im Extremfall kann diese Dispergierbarkeit durch das alleinige Vorliegen von Carboxylatgruppen oder durch das alleinige Vorliegen von derartigen Ethylenoxideinheiten gewährleistet sein. Vorzugsweise liegen in den erfindungsgemäßen Verfahrensprodukten jedoch sowohl ionische Gruppen als auch nicht-ionisch hydrophile Gruppen der genannten Art vor.

Bei den nicht-ionisch hydrophilen Gruppierungen handelt es sich vorzugsweise um endständige, Ethylenoxideinheiten aufweisende Polyetherketten. Die endständige Anordnung dieser Gruppierung wird durch die Mitverwendung von monofunktionellen Aufbaukomponenten der obengenannten Formeln (I) und (II) ermöglicht. Grundsätzlich ist es jedoch auch möglich, jedoch weit weniger bevorzugt, anstelle dieser monofunktionellen nicht-ionisch hydrophilen Aufbaukomponenten als Teil der Komponente (i) Diole mit seitenständigen, Alkylenoxideinheiten aufweisenden Polyetherketten der beispielsweise in US-PS 3 905 929 oder US-PS 4 190 566 offenbarten Art und/oder als Teil der Komponente (ii) Diisocyanate mit seitenständigen, Ethylenoxideinheiten aufweisenden Polyetherketten der in US-PS 3 920 598 oder US-PS 4 190 566 genannten Art einzusetzen. Dies hätte zur Folge, daß die nicht-ionisch hydrophilen Polyetherketten seitenständig in die erfindungsgemäßen Verfahrensprodukte eingebaut sind. Die gemachten Angaben bezüglich des Gehalts an Ethylenoxideinheiten würden sich in diesem Falle auf derartige seitenständig angeordnete Polyetherketten beziehen. In die Berechnung des Gehalts der Verfahrensprodukte an Ethylenoxideinheiten gehen jedoch innerhalb der Hauptkette angeordnete Ethylenoxideinheiten, wie sie beispielsweise bei Verwendung von Ethylenoxideinheiten aufweisenden Polyetherdiolen in die Verfahrensprodukte eingebaut werden, nicht ein.

Die oben beschriebenen Lösungen der NCO-Prepolymeren a), die im allgemeinen einen Feststoffgehalt von 20 bis 50 Gew.-% aufweisen, werden gegebenenfalls nach einer zumindest teilweisen Neutralisation von gegebenenfalls vorliegenden Carboxylgruppen mit tert.-Aminen der beispielhaft genannten Art mit den beispielhaft genannten Polyaminen zur Reaktion gebracht, wobei diese Umsetzung im allgemeinen bei 10 bis 50 ° C, vorzugsweise bei 15 bis 35 ° C vorgenommen wird. Bei der Umsetzung werden die Mengenverhältnisse der Komponenten a) und b) so gewählt, daß ein Äquivalentverhältnis von Isocyanatgruppen der Komponente a) zu primären und/oder sekundären Aminogruppen der Komponente b) von 1,05:1 bis 3:1, vorliegt. Im übrigen wird die Funktionalität und die Menge der Polyaminkomponente b) so bemessen, daß die resultierenden, wegen des verwendeten NCO-Überschusses noch freie Isocyanatgruppen aufweisenden Polyurethan-Polyharnstoffe eine mittlere NCO-Funktionalität von 2,2 bis 3,0, vorzugsweise von 2,2 bis 2,6 und einen NCO-Gehalt von 0,1 bis 5,0, vorzugsweise 0,5 bis 4,5 Gew.-% aufweisen. Die Polyamine b) kommen vorzugsweise in Form von 5 bis 25 gew.-%igen wäßrigen Lösungen zum Einsatz.

Die mittlere NCO-Funktionalität der Polyurethan-Polyharnstoffe kann aus der Anzahl der Äquivalente der NCO-Gruppen der Prepolymeren a), der Anzahl der Äquivalente der primären oder sekundären Aminogruppen der Komponente b) und der Anzahl der Mole der zum Einsatz gelangenden NCO-Prepolymeren und Polyamine nach folgender Gleichung

$$f = \frac{\sum Val_{NCO} - \sum Val_{>NH}}{\sum Mol_{(NCO + >NH\text{-}Verb.)} - \sum Val_{>NH}}$$

oder, bezogen auf die zu Beginn eingesetzten Ausgangsmaterialien, d.h. aus der Anzahl der Äquivalente der Isocyanatgruppen der Komponente (ii), der Anzahl der Äquivalente der Hydroxylgruppen der Komponente (i) und der Aminogruppen der Komponente b) und der Anzahl der Mole der zum Einsatz gelangenden Ausgangsverbindungen (i), (ii) und b) nach folgender Gleichung berechnet werden:

$$f = \frac{\sum Val_{NCO} - \sum Val_{(OH + >NH)}}{\sum Mol_{(NCO + OH- + >NH\text{-}Verb.)} - \sum Val_{(OH + >NH)}}$$

Die Reaktion der Isocyanatgruppen die in dem obengenannten Lösungsmittel gelösten NCO-Prepolymeren a) mit dem gegebenenfalls zusammen mit dem Polyamin b) eingeführten Wasser ist im Vergleich zu der NCO/NH-Reaktion von völlig untergeordneter Bedeutung und wird daher bei der Berechnung der NCO-Gehalte und der NCO-Funktionalität der Umsetzungsprodukte nicht berücksichtigt.

Die obere Grenze der NCO-Funktionalität der Polyurethan-Polyharnstoffe von 3,0 ist als Grenzwert zu betrachten, der leichten Schwankungen unterworfen sein kann und im wesentlichen vom Beitrag abhängt, den die einzelnen Komponenten zur Löslichkeit im gewählten Lösungsmittel beitragen. So kann sie beispielsweise bei Verwendung hoch alkylsubstituierter cycloaliphatischer Diisocyanate höher liegen als bei geradkettigen aliphatischen. Im allgemeinen ist der Grenzwert der Funktionalität der Wert, bei dem auch 15 Minuten nach der Zugabe der Aminkettenverlängerungsmittel die Lösung des Polyurethan-Polyharnstoffs nicht geliert oder höchstens eine schwache Trübung aufweist, sich jedoch ohne Probleme mit Wasser zu einer Dispersion umwandeln läßt. Die Grenzviskosität ist bei etwa 5000 mPas erreicht, die Dispergierung verläuft problemlos wenn die Viskosität der Polyurethanharnstofflösung unter 1000 mPas liegt.

Die Viskosität der Lösung des Polyurethan-Polyharnstoffs kann andererseits nicht beliebig durch Verdünnen mit dem Lösungsmittel herabgesetzt werden, da unter 20 Gew.-% Feststoff liegende Konzentrationen im allgemeinen dazu führen, daß bei der nachfolgenden Wasserzugabe nur eine unvollständige Dispergierung im Wasser erreicht wird. Die Menge des Lösungsmittels sollte so bemessen sein, daß die Lösung des kettenverlängerten Polyurethan-Polyharnstoffs einen Feststoffgehalt von 20 bis 50, vorzugsweise 25 bis 40 Gew.-% aufweist.

Die Dispergierung des gelöst vorliegenden Polyurethan-Polyharnstoffs in Wasser erfolgt durch Zugabe von Wasser vorzugsweise innerhalb von maximal 15 Minuten nach Beendigung der Kettenverlängerungsreaktion unter inniger Durchmischung, beispielsweise durch Rühren bei maximal 50° C, vorzugsweise maximal 35° C. Im Anschluß an die Durchmischung mit dem Wasser erfolgt vorzugsweise eine destillative Entfernung des Lösungsmittels. Die Wassermenge wird so bemessen, daß nach Entfernung des Lösungsmittels wäßrige Dispersionen mit einem Feststoffgehalt von 10 bis 60, vorzugsweise 20 bis 45 Gew.-% vorliegen. Nach der Durchmischung mit dem Wasser reagieren die Isocyanatgruppen des gelösten Polyurethan-Polyharnstoffs mit dem Wasser zum hochmolekularen Polyurethan-Polyharnstoff ab. Die Teilchengröße der dispergierten Polyurethan-Polyharnstoffe liegt im allgemeinen innerhalb des Bereichs von 10 bis 1000 nm, vorzugsweise innerhalb des Bereichs von 50 bis 500 nm.

Die Dispersionen können mit anderen ionischen oder nichtionischen Dispersionen verschnitten werden, wie z.B. mit Polyvinylacetat, Polyethylen-, Polystyrol-, Polybutadien-, Polyvinylchlorid-, Polyacrylat- und Copolymerisat- Kunststoff-Dispersionen. Auch der Zusatz von an sich bekannten chemisch nicht fixierten. vorzugsweise ionischen Emulgatoren ist möglich, jedoch selbstverständlich nicht erforderlich.

Schließlich können auch Füllstoffe, Weichmacher, Pigmente, Ruß- und Kieselsäuresole, Aluminium-, Ton-, Asbest-Dispersionen in die Dispersion eingearbeitet werden.

Die Dispersionen sind lagerstabil und können zu einem beliebigen späteren Zeitpunkt formgebend verarbeitet werden. Sie eignen sich als Beschichtungsmitel oder zur Herstellung von Beschichtungsmitteln für beliebige, vorzugsweise jedoch für harte, unflexible Substrate.

Vor dieser erfindungsgemäßen Verwendung der erfindungsgemäßen Dispersionen können diesen die üblichen Hilfs- und Zusatzmittel zugesetzt werden. Hierzu gehören beispielsweise Vernetzungsmittel wie Carbodiimide, blockierte Diisocyanate, sowie teilweise oder ganz veretherte Melaminharze, Pigments, insbesondere Metallic-Pigmente auf der Basis von Aluminiumflocken; Füllstoffe wie beispielsweise Ruß, Kieselsäure, Talkum, Kaolin, Titandioxid, Glas als Pulver oder in Form von Fasern, Cellulose oder Celluloseaceto-butyrat oder, zur Erhöhung der Filmbildungstemperatur und zur gezielten Verzögerung der Trocknung, Koaleszenzlöser, wie z.B. Diacetonalkohol, N-Methylpyrrolidon, 1-Methoxypropanol, Cyclohexanon, Ethylenglykolmonobutylether oder Diethylenglykolmonobutylether, die jedoch nur in kleinen Mengen (weniger als 5 Gew.-%, bezogen auf Dispersion) zugesetzt werden.

Die Verarbeitung der Dispersionen zur Herstellung von Überzügen kann nach beliebigen Methoden, beispielsweise durch Walzen, Rakeln, Streichen, Gießen, Sprühen oder Tauchen erfolgen. Die Dispersionen können bei Raumtemperatur oder erhöhter Temperatur verarbeitet werden, wobei im allgemeinen auf die Mitverwendung von Koaleszenzlösungsmitteln verzichtet werden kann, was die Trocknung wünschenswert beschleunigt. Es resultieren Überzüge die von in kürzester Zeit ihre endgültige Oberflächenhärte erreichen, welche in vielen Fällen weit über 100 sec (Pendelhärte nach König) liegt.

In den nachfolgenden Beispielen beziehen sich alle Angaben in "Teilen" auf Gewichtsteile und alle Angaben in "%" auf Gewichtsprozente.

Beispiel 1

620.5 Teile eines Polyesters aus Adipinsäure sowie Hexandiol-1,6 und 2,2-Dimethylpropandiol-1,3 (im Molverhältnis 0,65:0,35) der OH-Zahl 66 werden mit 31,5 Teilen Butandiol-1,4, 43 Teilen eines Polyethers aus einem Gemisch aus 83 % Ethylenoxid und 17 % Propylenoxid, gestartet auf n-Butanol (OH-Zahl 26), 40,2 Teilen 2,2-Dimethylolpropionsäure und 13,4 Teilen Trimethylolpropan vermischt und bei 70 bis 110° C

mit 488,4 Teilen 3-Isocyanatomethyl-3,5,5-trimethylcyclohexylisocyanat (IPDI) solange umgesetzt, bis der NCO-Gehalt des resultierenden NCO-Prepolymeren a) auf ca. 6,7 % gefallen ist (NCO/OH-Äquivalentverhältnis 1,87:1).

Das entstandene Prepolymer wird in 2420 Teilen Aceton gelöst und bei Raumtemperatur mit 30,3 Teilen Triethylamin versetzt. Aus 24 Teilen Ethylendiamin, 10,3 Teilen Diethylentriamin und 310 Teilen entionten Wassers wird eine Lösung zubereitet und diese der Prepolymerlösung unter Rühren innerhalb 5 Minuten zugefügt (NCO/NH-Äquivalentverhältnis 1,28:1). Nach 15 minütigem Nachrühren werden 2110 Teile entionisierten Wassers unter intensivem Rühren zugegeben. Hierbei entsteht eine bläulich opake Dispersion des Festkörpers in einer Mischung aus Wasser und Aceton, aus der das Aceton durch Destillation unter vermindertem Druck entfernt wird.

Zurück bleibt eine rein wäßrige Dispersion mit einem Festkörpergehalt von 35 %.

Charakteristische Daten:

NCO-Gehalt des NCO-Prepolymeren: 6,96 %
NCO-Funktionalität des Prepolymeren: 2,08
NCO-Funktionalität des kettenverlängerten Polyurethan-Polyharnstoffs
(Ohne Einbeziehung einer möglicherweise in untergeordnetem Umfang ablaufenden NCO/Wasser-Reaktion): 2,47
NCO-Gehalt des kettenverlängerten NCO-Prepolymeren
(ohne Berücksichtigung der in inntergeordnetem Umfang ablaufenden NCO/Wasser-Reaktion): 3,07 %
Gehalt des dispergierten Feststoffs an Ethylenoxideinheiten: 2,64 %
Gehalt des dispergierten Feststoffs an Carboxylatgruppen: 23,1 Milliäquivalente pro 100 g
Gehalt des dispergierten Feststoffs an Urethangruppen: 10,65 %.

Beispiel 2

In derselben Weise wie in Beispiel 1 wird aus 612 Teilen des dort beschriebenen Adipinsäurepolyesters, 27 Teilen Butandiol-1,4, 43 Teilen des dort beschriebenen auf n-Butanol gestarteten Polyethers, 40,2 Teilen Dimethylolpropionsäure, 26,8 Teilen Trimethylolpropan und 488,4 Teilen IPDI (NCO/OH-Äquivalentverhältnis: 1,73:1) ein Prepolymer mit einem Isocyanatgehalt von ca. 6,1 hergestellt, in 2420 Teilen Aceton aufgelöst und bei Raumtemperatur mit 30,3 Teilen Triethylamin versetzt.

Die Kettenverlängerung wird, wie in Beispiel 1 beschrieben, mit einer Lösung von 30 Teilen Ethylendiamin und 5,15 Teilen Diethylentriamin in 310 Teilen Wasser durchgeführt (NCO/NH-Äquivalentverhältnis: 1,19:1). Nach dem Dispergieren mit 2730 Teilen Wasser wird das Aceton destillativ entfernt. Zurück bleibt eine bläulichweiße Dispersion mit einem Festkörpergehalt von 30 %.

Charakteristische Daten:

NCO-Gehalt des NCO-Prepolymeren: 6,3 %
NCO-Funktionalität des Preplymeren: 2.21
NCO-Gehalt des kettenverlängerten Prepolymeren
(ohne Berücksichtigung der in untergeordnetem Umfang ablaufenden NCO/Wasser-Reaktion): 2,29 %
NCO-Funktionalität des kettenverlängerten Prepolymeren
(ohne Berücksichtigung der in geringem Umfang ablaufenden NCO/Wasser-Reaktion): 2,96
Gehalt des dispergierten Feststoffs an Ethylenoxideinheiten: 2,7 %
Gehalt des dispergierten Feststoffs an Carboxylatgruppen: 23,0 Milliäquivalente pro 100 g
Gehalt des dispergierten Feststoffs an Urethangruppen: 11,5 %.

Beispiel 3 (Vergleich)

Das in Beispiel 2 beschriebene Prepolymer wird in 2410 Teilen Aceton aufgelöst und mit 30.3 Teilen Triethylamin versetzt. Eine Lösung von 30,9 Teilen Diethylentriamin in 270 Teilen Wasser wird zubereitet und zügig zur Prepolymerlösung gegeben (NCO/NH-Äquivalentverhältnis: 2,07:1). Bereits 10 Sekunden nach der ersten Zugabe beginnt die Viskosität zu steigen, die Lösung wird rasch hochviskos und trübe und verfestigt sich schließlich zu gelartigen, zähe Brocken. Eine Dispergierung in Wasser ist nicht mehr möglich. Die berechnete Funktionalität des kettenverlängerten Prepolymeren beträgt 4.

Beispiel 4

In derselben Weise wie in Beispiel 1 wird aus 612 Teilen des dort beschriebenen Adipinsäurepolyesters, 27 Teilen Butandiol-1,4, 43 Teilen des dort beschriebenen, auf n-Butanol gestarteten Polyethers, 40,2

Teilen Dimethylolpropionsäure, 20,1 Teilen Trimethylolpropan und 488,4 Teilen IPDI ein Prepolymer mit einem Isocyanatgehalt von ca. 6,7 % hergestellt, in 2400 Teilen Aceton aufgelöst und mit 30.3 Teilen Triethylamin versetzt. Die Kettenverlängerung wird, wie in Beispiel 1 beschrieben, mit einer Lösung von 24 Teilen Ethylendiamin und 5.15 Teilen Diethylentriamin in 270 Teilen Wasser durchgeführt (NCO/NH-Äquivalentverhältnis: 2,1:1). Nach dem Dispergiere mit 2780 Teilen Wasser entsteht eine opake Dispersion, die nach der destillativen Entfernung des Acetons einen Festkörpergehalt von 30 % besitzt.

Charakteristische Daten:
NCO-Funktionalität des Prepolymeren: 2,14
NCO-Funktionalität des kettenverlängerten Prepolymeren
(ohne Einbeziehung der in geringem Umfang ablaufenden NCO/Wasser-Reaktion): 2,41
Gehalt des dispergierten Feststoffs an Ethylenoxideinheiten: 2,67 %
Gehalt des dispergierten Feststoffs an Carboxylatgruppen: 23,25 Milliäquivalente pro 100 g

Beispiel 5

Das in Beispiel 4 beschriebene Prepolymer wird in 2400 Teilen Aceton aufgelöst und mit 30,3 Teilen Triethylamin versetzt. Die Kettenverlängerung erfolgt mit einer Lösung von 18 Teilen Ethylendiamin und 10,3 Teilen Diethylentriamin in 260 Teilen Wasser (NCO/NH-Äquivalentverhältnis: 2,23:1). Nach dem Zusetzen von 2750 Teilen Wasser entsteht eine blaustichige, fast transparente Dispersion, die nach der destillativen Entfernung des Acetons einen Festkörpergehalt von 30 % besitzt.

Charakteristische Daten:
Gehalt an Ethylenoxideinheiten: 2,67 %
Gehalt an Carboxylatgruppen $-COO^-$: 1,02 %
NCO-Funktionalität des kettenverlängerten Prepolymeren
(ohne Einbeziehung der in geringem Umfang ablaufenden NCO/Wasser-Reaktion): 2,52

Beispiel 6 (Vergleich)

Das in Beispiel 4 beschriebene Prepolymer wird in 2425 Teilen Aceton aufgelöst, bei Raumtemperatur mit 30,3 Teilen Triethylamin versetzt und mit einer Lösung von 30 Teilen Ethylendiamin und 15,45 Teilen Diethylentriamin in 400 Teilen Wasser über einen Zeitraum von 60 Sekunden vermischt. Gegen Ende der Zugabe beginnt die Viskosität der Lösung merklich zu steigen, etwa 90 Sekunden nach Beendigung der Reaktion verfestigt sich die Lösung zu weißen, gallertartigen Brocken. Eine Dispergierung in Wasser ist nicht mehr möglich.
Die berechnete Funktionalität des kettenverlängerten NCO-Prepolymeren (ohne Berücksichtigung der in untergeordnetem Umfang ablaufenden NCO/Wasser-Reaktion) beträgt 4.

Beispiel 7

In derselben Weise wie in Beispiel 1 wird aus 615,4 Teilen des dort beschriebenen Adipinsäurepolyesters, 31,5 Teilen Butandiol-1,4, 43 Teilen des dort beschriebenen auf n-Butanol gestarteten Polyethers, 40,2 Teilen Dimethylolpropionsäure, 13,4 Teilen Trimethylolpropan und 555 Teilen IPDI ein Prepolymer mit einem Isocyanatgehalt von ca. 8,4 % hergestellt, in 2565 Teilen Aceton aufgelöst und bei Raumtemperatur mit 30.3 Teilen Triethylamin versetzt. Die Kettenverlängerung wird, wie in Beispiel 1 beschrieben, mit einer Lösung von 42 Teilen Ethylendiamin und 10,3 Teilen Diethylentriamin in 400 Teilen Wasser durchgeführt (NCO/NH-Äquivalentverhältnis: 1,56:1).

Nach der Dispergierung mit 2165 Teilen Wasser und der destillativen Entfernung des Acetons bleibt eine bläulich-weiße Dispersion mit einem Festkörpergehalt von 30 % zurück.

Charakteristische Daten:
NCO-Funktionalität des Prepolymeren: 2,06
NCO-Funktionalität des kettenverlängerten NCO-Prepolymeren
(ohne Berücksichtigung der in geringem Umfang ablaufenden NCO/Wasser-Reaktion): 2,47 %
Gehalt des dispergierten Feststoffs an Ethylenoxideinheiten: 2,49 %
Gehalt des dispergierten Feststoffs an Carboxylatgruppen: 23,0 Milliäquivalente pro 100 g

Beispiel 8

Das in Beispiel 7 beschriebene Prepolymer wird in 2575 Teilen Aceton gelöst und bei Raumtemperatur mit 30,3 Teilen Triethylamin versetzt. Mit einer Lösung von 48 Teilen Ethylendiamin und 10,3 Teilen Diethylentriamin in 540 Teilen Wasser (NCO/NH-Äquivalentverhältnis: 1,4:1) wird nun, wie in Beispiel 1 beschrieben, kettenverlängert. Nach dem Zusetzen von 2035 Teilen Wasser entsteht eine bläulich-weiße Dispersion, die nach der destillativen Entfernung des Acetons einen Festkörpergehalt von 35 % besitzt.

Charakteristische Daten:
Funktionalität des kettenverlängerten NCO-Prepolymeren
(ohne Einbeziehung der in untergeordnetem Umfang ablaufenden NCO/Wasser-Reaktion): 2,63
Gehalt des dispergierten Feststoffs an Ethylenoxideinheiten: 2,48 %
Gehalt des dispergierten Feststoffs an Carboxylatgruppen: 21,6 Milliäquivalente pro 100 g

Beispiel 9 (Vergleich)

Das in Beispiel 7 beschriebene Prepolymer wird in 2590 Teilen Aceton gelöst und bei Raumtemperatur mit 30,3 Teilen Triethylamin versetzt. Eine Lösung von 42 Teilen Ethylendiamin und 20,6 Teilen Diethylentriamin in 540 Teilen Wasser (NCO/NH-Äquivalentverhältnis: 1,33:1) wird innerhalb 60 Sekunden zugegeben. Obwohl gegen Ende der Zugabe die Viskosität der Lösung bereits stark zu steigen beginnt, gelingt es, unmittelbar anschließend innerhalb 10 Sekunden 2050 Teile Wasser in die Lösung einzurühren. Die entstehende Dispersion ist weiß und grobteilig und agglomeriert nach etwa 15 minütigem Nachrühren zu einer käsigen Masse.

Die berechnete Funktionalität des kettenverlängerten NCO-Prepolymeren (ohne Einbeziehung der in untergeordnetem Umfang ablaufenden NCO/Wasser-Reaktion) beträgt 3,51.

**Patentansprüche**

**1.** Verfahren zur Herstellung von wäßrigen Dispersionen von Polyurethan-Polyharnstoffen durch Umsetzung von

a) NCO-Prepolymeren auf Basis von (i) organischen Polyhydroxylverbindungen und gegebenenfalls organischen Monohydroxylverbindungen und (ii) überschüssigen Mengen an organischen Polyisocyanaten und gegebenenfalls Monoisocyanaten
mit
b) organischen Polyaminen

in Gegenwart eines mit Wasser mischbaren, gegenüber Isocyanatgruppen inerten, schwach polaren Lösungsmittels mit einem bei Normaldruck unterhalb 100° C liegenden Siedepunkt, wobei die Komponente a) und/oder die Komponente b) Carboxylatgruppen und/oder nicht-ionisch-hydrophile Gruppierungen aufweisen, so daß in den Verfahrensprodukten, bezogen auf Feststoff, bis zu 100 Milliäquivalente pro 100 g an Carboxylatgruppen und bis zu 10 Gew.-% an in end- oder seitenständigen Polyetherketten eingebauten Ethylenoxideinheiten vorliegen, und anschließende Überführung der resultierenden Lösung der Umsetzungsprodukte in dem genannten Lösungsmittel in eine wäßrige Dispersion durch Vermischen mit Wasser und gegebenenfalls anschließende destillative Entfernung des eingesetzten Lösungsmittels, dadurch gekennzeichnet, daß man

a) als NCO-Prepolymere solche einer (mittleren) NCO-Funktionalität von 2 bis 2,3 und mit einem (mittleren) Molekulargewicht von 700 bis 5000
und
b) als organische Polyamine primäre und/oder sekundäre Aminogruppen aufweisende Polyamine oder deren Gemische einer (mittleren) Aminfunktionalität von 2,05 bis 3 und mit einem (mittleren) Molekulargewicht von 60 bis 2000

verwendet und die Reaktion unter Einhaltung eines Äquivalentverhältnisses von Isocyanatgruppen der Komponente a) zu Aminogruppen der Komponente b) von 1,05:1 bis 3:1 durchführt wobei Art und Mengenverhältnisse so gewählt werden, daß die resultierenden Umsetzungsprodukte eine NCO-Funktionalität von 2,2 bis 3,0 und einen NCO-Gehalt von 0,1 bis 5,0 Gew.-% aufweisen.

**2.** Verfahren gemäß Anspruch 1, dadurch gekennzeichnet, daß man Art und Mengenverhältnisse der organischen Polyhydroxylverbindungen (i) so wählt, das die resultierenden Verfahrensprodukte einen Gehalt an Urethangruppen von 5 bis 20 Gew.-% aufweisen.

3. Verwendung der gemäß Anspruch 1 und 2 erhältlichen wäßrigen Dispersionen als Beschichtungsmittel oder zur Herstellung von Beschichtungsmitteln für harte, unflexible Substrate.

## Claims

1. A process for the production of aqueous dispersions of polyurethane polyureas by reaction of

   a) NCO prepolymers based on (i) organic polyhydroxyl compounds and, optionally, organic monohydroxyl compounds and (ii) excess quantities of organic polyisocyanates and optionally monoisocyanates

   with

   b) organic polyamines

   in the presence of a water-miscible, weakly polar solvent which is inert to isocyanate groups and has a boiling point under normal pressure below 100° C, component a) and/or component b) containing carboxylate groups and/or nonionically hydrophilic groups so that, based on solids, the products of the process contain up to 100 milliequivalents per 100 g carboxylate groups and up to 10% by weight ethylene oxide units incorporated in terminal or lateral polyether chains, and subsequent conversion of the resulting solution of the reaction products in the solvent mentioned into an aqueous dispersion by mixing with water, optionally followed by removal of the solvent used by distillation, characterized in that

   a) the NCO prepolymers used have an (average) NCO functionality of 2 to 2.3 and an (average) molecular weight of 700 to 5,000

   and

   b) the organic polyamines used are polyamines containing primary and/or secondary amino groups or mixtures thereof having an (average) amine functionality of 2.05 to 3 and an (average) molecular weight of 60 to 2,000

   and the reaction is carried out with an equivalent ratio of isocyanate groups of component a) to amino groups of component b) of 1.05:1 to 3:1, the type and quantitative ratios being selected so that the resulting reaction products have an NCO functionality of 2.2 to 3.0 and an NCO content of 0.1 to 5.0% by weight.

2. A process as claimed in claim 1, characterized in that the type and quantities of organic polyhydroxyl compounds (i) used are selected so that the resulting products of the process contain from 5 to 20% by weight urethane groups.

3. The use of the aqueous dispersions obtainable by the process claimed in claims 1 and 2 as coating compounds or for the production of coating compounds for hard inflexible substrates.

## Revendications

1. Procédé de préparation de dispersions aqueuses de polyuréthanne-polyurées par réaction de

   a) des prépolymères à groupes NCO à base de (i) des composés organiques polyhydroxylés et le cas échéant des composés organiques monohydroxylés, et (ii) un excès de polyisocyanates et le cas échéant de mono-isocyanates organiques

   avec

   b) des polyamines organiques

   en présence d'un solvant peu polaire, miscible à l'eau, inerte à l'égard des groupes isocyanate, bouillant à pression normale au-dessous de 100° C, le composant a) et/ou le composant b) contenant des groupes carboxylate et/ou des groupements hydrophiles non ioniques en proportions telles que dans les produits obtenus conformément à l'invention, et, par rapport aux matières solides, il y ait jusqu'à 100 milliéquivalents pour 100 g de groupes carboxylate et jusqu'à 10 % en poids de motifs d'oxyde d'éthylène inclus dans des chaînes de polyéthers terminales ou latérales,

   et conversion subséquente de la solution des produits de réaction dans le solvant mentionné en une dispersion aqueuse par mélange avec de l'eau suivi le cas échéant de l'élimination par distillation du solvant mis en oeuvre, caractérisé en ce que

   a) on utilise en tant que prépolymères à groupes NCO des prépolymères qui ont une fonctionnalité (moyenne) en groupes NCO de 2 à 2,3 et ont un poids moléculaire (moyen) de 700 à 5 000,

   et

b) on utilise en tant que polyamines organiques des polyamines contenant des groupes amino primaires et/ou secondaires ou des mélanges de telles polyamines, à une fonctionnalité (moyenne) en groupes amino de 2,05 à 3, et à un poids moléculaire (moyen) de 60 à 2 000,

et on effectue la réaction en maintenant un rapport de 1,05 : 1 à 3 : 1 entre les équivalents de groupes isocyanate du composant a) et les équivalents de groupes amino du composant b), la nature et les proportions relatives des composants étant choisies en sorte que les produits de réaction obtenus aient une fonctionnalité en NCO de 2,2 à 3,0 et une teneur en NCO de 0,1 à 5,0 % en poids.

2. Procédé selon la revendication 1, caractérisé en ce que la nature et les proportions des composés organiques polyhydroxylés (i) sont choisies en sorte que les produits obtenus aient une teneur en groupes uréthanne de 5 à 20 % en poids.

3. Utilisation des dispersions aqueuses obtenues selon les revendications 1 et 2 en tant que produits de revêtement ou pour la préparation de produits de revêtement sur supports durs, non flexibles.